# EUROPÄISCHE PATENTSCHRIFT

(11) **EP 1 545 961 B1**
(45) Veröffentlichungstag und Bekanntmachung des Hinweises auf die Patenterteilung: **07.01.2009**
(21) Anmeldenummer: 03750679.7
(22) Anmeldetag: 02.10.2003
(51) Int. Cl.: B62D 25/08, B60T 13/567

(54) **KRAFTFAHRZEUG MIT EINER STIRNWAND**
MOTOR VEHICLE WITH A PARTITION WALL
VÉHICULE À MOTEUR AVEC UN TABLIER

(30) Priorität: 02.10.2002 DE 10246995
(43) Veröffentlichungstag der Anmeldung: 29.06.2005
(73) Patentinhaber: Faurecia Innenraum Systeme GmbH, 76767 Hagenbach (DE)
(72) Erfinder: BRAUN, Marco, 76848 Lug (DE); KOBER, Steve, 08233 Treuen (DE)
(74) Vertreter: Pfenning, Meinig & Partner GbR
(86) Internationale Anmeldenummer: PCT/EP2003/010950
(87) Internationale Veröffentlichungsnummer: WO 2004/033274

(56) Entgegenhaltungen:
- EP-A- 0 338 923
- WO-A-99/15238
- DE-A- 3 522 203
- DE-A- 10 041 711
- DE-A- 19 534 656
- GB-A- 2 329 363
- US-A- 4 353 430
- US-A- 4 594 854
- US-A- 4 658 660
- PATENT ABSTRACTS OF JAPAN vol. 015, no. 186 (M-1112), 14. Mai 1991 (1991-05-14) -& JP 03 045461 A (NISSAN MOTOR CO LTD), 27. Februar 1991 (1991-02-27)

## Beschreibung

Die vorliegende Erfindung betrifft ein Kraftfahrzeug mit einer stirnwand.

Stirnwände für Kraftfahrzeuge sind prinzipiell bekannt. Insbesondere im Zuge von Leichtbauanforderungen sowie erhöhten Komfortmaßstäben bei modernen Kraftfahrzeugen stellt sich daher die Aufgabe, Stirnwände herzustellen, welche einerseits leichtgewichtig sind und andererseits eine hohe Steifigkeit aufweisen. Dies ist zum einen vorteilhafterweise eine hohe Biegesteifigkeit, welche insbesondere beim Frontalcrash zum Tragen kommt und außerdem eine Schubfestigkeit, welche bei Längstorsionen der Karosserie hilft die Verformung zu begrenzen und somit den Komfort zu steigern.

Prinzipiell ist es bekannt, Komponenten wie Bremskraftverstärker (bzw. "Hauptbremszylinder") fest an einer Stirnwand anzukoppeln. Dies kann z.B. dadurch geschehen, dass der Bremskraftverstärker an einer Seite einer Stirnwand (meist motorraumseitig) befestigt wird und mit Durchsteckbolzen an der Stirnwand beidseitig gekontert wird. Für den Fall, dass die Stirnwand einen aus Leichtbaugründen gewählten Sandwichaufbau enthält (d.h. eine erste sowie davon beabstandet eine zweite Wand mit dazwischen liegendem Schaum) ist meist vorgesehen, dass in diesem Zwischenraum zusätzlich eine Hülse vorgesehen ist, welche ein Zusammendrücken des Sandwichaufbaus im Bereich der Schaumschicht bei Anziehen der Konterschrauben verhindert.

Die Druckschrift US 4353430 zeigt eine Stirnwand, welche doppelwandig ausgeführt ist und ein Loch zum Aufnehmen eines einwandigen Stirnwandmoduls aufweist, an welchem ein Bremskraftverstärker und ein Kupplungszylinder angeordnet sind. Der Bremskraftverstärker ist dabei am einwandigen Stirnwandmodul fahrgastraumseitig angeordnet. Zusätzlich zur Schallübertragung aufgrund des Bremskraftzylinders selbst, werden Schwingungen des Bremskraftzylinders über das einwandige Stirnwandmodul in den Fahrgastraum übertragen

Solche bekannten Lösungen weisen zwar einerseits eine gute Stabilität auf, allerdings sind die Geräuscheigenschaften solcher Stirnwände meist unbefriedigend. Es ist meist nötig, dass bei solchen Stirnwänden, welche aus Leichtbaugründen im Sandwichaufbau erstellt wurden, z.B. eine zusätzliche Schwermatte innenraumseitig aufgebracht wird, welche der Schalldämpfung dient. Hierdurch werden allerdings Leichtbauanforderungen wieder zum Teil zunichte gemacht.

Die Druckschrift DE 3522293 A1 zeigt eine Möglichkeit motorraumseitig liegende Gegenstände geräuscharm an einer Stirnwand zu befestigen. Die Gegenstände werden dabei ausschließlich an der motorraumseitigen Wand einer doppelwandigen Stirnwand befestigt. Allerdings offenbart das Dokument keinerlei Hinweise darauf wie Gegenstände, wie zum Beispiel ein Bremskraftzylinder, welche vom Motorraum in den Fahrgastraum führen mit Hilfe dieser Methode an der Stirnwand befestigt werden können. Die Druckschrift US 4594845 zeigt eine motorraumseitige Anordnung eines Bremskraftzylinders, welcher durch die doppelwandige Stirnwand hindurchreicht, jedoch an beiden Wänden der Stirnwand befestigt ist. Eine Geräuschübertragungsentkopplung der ersten und zweiten Wand der Stirnwand wird durch eine derartige Befestigung nicht gegeben.

Eine Weiterentwicklung der obigen Montagen eines Bremskraftverstärkers an einer Stirnwand lässt sich beispielsweise der Druckschrift GB 2329363 entnehmen, die ein Kraffahrzeug nach dem Oberbegriff des Anspruchs 1 zeigt. Hierbei wird der Bremskraftverstärker lediglich mit einer motorraumseitigen Wand einer doppelwandigen Stirnwand verbunden. Nachteil an der gezeigten Lösung ist jedoch, dass der Bremskraftzylinder flächig auf die motorraumseitige Wand der Stirnwand angelegt und mit dieser verschraubt wird, so dass auf den Bremskraftzylinder eine große Hebelwirkung wirkt, so dass aufgrund der Hebelwirkung bereits kleinste Vibrationen verstärkt werden. Diese werden wiederum als Geräuscheintrag in den Fahrgastraum weitergeleitet.

Die Aufgabe der vorliegenden Erfindung ist es daher, eine leichtgewichtige und stabile Stirnwand bereitzustellen, welche gute Geräuschdämmungseigenschaften aufweist und den möglichen Geräuscheintrag durch den Bremskraftzylinder aufgrund einer intelligenten Aufhängung minimiert.

Diese Aufgabe wird durch eine Stirnwand nach Anspruch 1 gelöst.

Dadurch, dass bei einer gattungsgemäßen Stirnwand, welche eine erste sowie davon beabstandet eine zweite Wand aufweist, die erste Wand eine Aussparung zur Aufnahme eines ausschließlich an der ersten Wand befestigten Bremskraftverstärkers bzw. "Hauptbremszylinders" aufweist, werden die oben genannten Probleme vermieden.

Zum einen trägt es zum Leichtbau bei, dass die erste Wand im Bereich des Bremskraftverstärkers ausgespart ist, d.h. es ist nicht nötig, hier praktisch eine "Doppelwandung" vorzusehen, da der Bremskraftverstärker im Bereich der Aussparung praktisch die Stirnwand überbrückt und daher keine Stirnwand selbst in diesem Bereich notwendig ist bzw. zumindest die erste Wand bereichsweise entfällt.

Wesentlich ist hierbei außerdem, dass der Bremskraftverstärker lediglich an der ersten Wand befestigt ist. Für die Befestigung bietet sich hierbei insbesondere eine für die Reparatur lösbare Verbindung, wie z.B. eine Schraubverbindung an. Es können auch Verbindungen wie Verschrauben und zusätzliches Kleben bzw. Klemmen und zusätzliches Kleben etc. zur Anwendung kommen. Eine Befestigung in dieser Art und Weise des Bremskraftverstärkers ist an der zweiten Wand nicht gegeben. Auch wenn es hierbei unter Umständen zu Berührungen des Bremskraftverstärkers mit der zweiten Wand kommen kann, ist keine starre Befestigung gegeben, welche eine Körperschallübertragung ermöglichen würde und hiermit zu einem Geräuscheintrag in den Kraftfahrzeuginnenraum führen würde.

Auch der Luftschallübertrag wird vermieden, weil der Bremskraftverstärker den Bereich der Aussparung voll überdeckt und somit keine Öffnungen freiliegen, durch welche Luftschall vom Motorraum in den Kraftfahrzeuginnenraum gelangen könnte.

Weitere Vorteile entstehen dadurch, dass der Bremskraftverstärker praktisch integraler Bestandteil der ersten Wand der Stirnwand wird und somit einerseits eine Versteifung dieser ersten Wand darstellt und andererseits die akustisch wirksame Masse dieser Stirnwand drastisch erhöht wird. Insbesondere im Zusammenspiel mit weiteren Versteifungsmaßnahmen für diese erste Wand wird es somit möglich, dass diese Wand bzw. gewünschte Teilbereiche hiervon als "ein Massenschwinger" zu betrachten sind und hierdurch weniger vibrationsanfällig sind.

In diesem Zusammenhang wird auf die Deutsche Patentanmeldung der vorliegenden Anmelderin "Stirnwandmodul", eingereicht am selben Tage wie die vorliegende Anmeldung, internes Aktenzeichen F02049, verwiesen. Sämtliche der dort geschilderten Ausführungsbeispiele bzw. Details in Bezug auf den Aufbau des dortigen Stirnwandmoduls (bezüglich Material, Anordnung von erster und zweiter Wand zueinander) sowie in Bezug auf akustische Gesichtspunkte (Erhöhung der akustisch wirksamen Masse einer Wand des Sandwichs, Einbau des Sandwichs, hierzu angegebene Zahlenwerte) sollen als Bestandteil der hier vorliegenden Anmeldung gelten. Es wird somit ausdrücklich betont, dass die entsprechenden Passagen der zitierten Anmeldung in dieser Anmeldung inkorporiert sind, um unnötige Wiederholungen der dortigen Passagen zu vermeiden.

Zusammengefasst sind die Vorteile des vorliegenden Aufbaus somit eine akustische Entkopplung der fahrgastraumseitigen Deckschicht der Stirnwand (d.h. der zweiten Wand von der ersten Wand). Eine verbesserte Abdichtung von Motorraum und Fahrerraum, eine Minimierung der Anzahl der Durchbrüche in der Stirnwand, verbesserte Montage-/Demontagebedingungen sowie eine Minimierung der Schwingungsanregung durch den Bremskraftverstärker, d.h. Minimierung der mechanischen Belastung der Stirnwand.

Vorteilhafte Weiterbildungen der vorliegenden Erfindung werden in den abhängigen Ansprüchen beschrieben.

Die Erfindung sieht vor, dass der Bremskraftverstärker eine Randfläche aufweist, welche auf dem Randbereich der Aussparung aufliegt. Hierdurch ist es möglich, dass ein vollflächiger Anschluss zwischen Bremskraftverstärker und Randbereich gegeben ist (im Gegensatz zu einer nur punktweisen Befestigung). Hierdurch wird der Durchtritt von Luftschall vermieden. Außerdem wird eine höhere Stabilität durch die feste Ankopplung des Bremskraftverstärkers erreicht.

Zur noch höheren Stabilisierung kann der Randbereich der Aussparung verstärkt sein, d.h. dass in diesem Bereich eine größere Wandstärke vorgesehen ist bzw. ein zusätzlich verstärkendes Bauteil verbaut ist.

Insbesondere zu Stabilitätszwecken ist es auch sinnvoll, dass Aussparung sowie Randfläche rund sind, um z.B. eine gleichmäßige Stabilität gegenüber Schubbeanspruchung zu gewährleisten.

Besonders vorteilhaft ist, dass zwischen der Randfläche des Bremskraftverstärkers und dem Randbereich der Aussparung ein Elastomerring angeordnet ist, welcher zum Bremskraftverstärker gehört. Hierbei wird ein Luftschalldurchtritt noch weiter minimiert, außerdem wird Körperschall gedämpft. Selbstverständlich ist diese Maßnahme auch ohne eine Verstärkung des Randbereichs der Aussparung möglich.

Eine weitere vorteilhafte Weiterbildung sieht vor, dass der Bremskraftverstärker mit der ersten Wand verschraubt ist. Selbstverständlich gibt es auch andere Möglichkeiten der Fügung (Verspannung mittels Klammern, Verklebung etc., allerdings ist die Fügung mittels Schrauben für die Montage bzw. Demontage am günstigsten). Zusätzlich ist natürlich auch eine Verklebung möglich.

Die Erfindung sieht auch vor, dass die zweite Wand eine Durchführöffnung für den entsprechenden Teil des Bremskraftverstärkers aufweist. Der Bremskraftverstärker ist somit auch innerhalb der Stirnwand angeordnet, hierdurch ergibt sich eine noch bessere Ausnutzung des Bauraums im Sandwichbereich. Im Bereich der Durchführöffnung des Bremskraftverstärkers ist vorzugsweise ein Spalt vorgesehen zwischen Bremskraftverstärker und Durchführöffnung, so dass es nicht zur Berührung beider Komponenten und somit zur Körperschallübertragung kommen kann. Es ist schwingungstechnisch besonders günstig, wenn der Spalt zwischen Durchführöffnung und Bremskraftverstärker im Bereich der Durchführöffnung zwischen 1 und 5 mm beträgt.

Eine weitere vorteilhafte Weiterbildung sieht vor, dass die Stirnwand im Bereich der Aussparung und/oder der Durchführöffnung Auswölbungen aufweist. Hiermit wird zum einen erreicht, dass eine Erhöhung der Stabilität der Stirnwand in diesen Bereichen gegeben ist und somit auch die akustischen Eigenschaften der einzelnen Wände verbessert werden, da größere Bereiche "akustisch wirksam" sind, d.h. als schwingungstechnische Einheiten gesehen werden können. Hierzu können gegebenenfalls im Bereich der Aussparung bzw. der Durchführöffnung noch Verstärkungsstege vorgesehen werden, wodurch die Masse des Bremskraftverstärkers noch besser "akustisch wirksam" gemacht wird (siehe zur Beschreibung dieses Effektes auch die oben zitierte Anmeldung des vorliegenden Anmelders).

Eine weitere vorteilhafte Weiterbildung sieht vor, dass zwischen erster und zweiter Wand Schaum angeordnet ist. Dieser Schaum dient hierbei weniger der Befestigung von erster und zweiter Wand. Der Hauptzweck des Schaums ist die Eliminierung von Luftschall sowie die Dämpfung von Körperschall, damit keine Schallübertragung von der ersten Wand zur zweiten Wand hin möglich ist.

Dieser Schaum kann auf verschiedene Arten ausgeführt sein. Es ist z.B. möglich, dass eine Schaumschicht konstanter Dicke zwischen erster und zweiter Wand vorgesehen ist, welche selbst im Bereich des Bremskraftverstärkers ihre Dicke nicht ändert (in diesem Fall ergeben sich unter Umständen auch Hohlräume innerhalb der Auswölbung im Bereich der Aussparung; hierbei wird der Einbau verschieden großer Bremskraftverstärker - z.B. für unterschiedliche Motorisierungen - möglich). Es ist selbstverständlich auch möglich, dass der gesamte Zwischenraum zwischen erster und zweiter Wand mit Schaum belegt wird bzw. der gesamte Bremskraftverstärker in diesem Zwischenraum auch mit eingeschäumt wird. In diesem Falle ist es auch möglich, dass der Bremskraftverstärker auf seiner Außenfläche mit einem schaumabweisenden Material belegt ist. Hierdurch wird der Bremskraftverstärker im Falle der Einschäumung nicht untrennbar mit der Stirnwand verbunden, dies ist wichtig für den Wechsel eines Bremskraftverstärkers. Als Schaum wird vorteilhafterweise ein PU-Schaum verwendet.

Weitere vorteilhafte Weiterbildungen werden in den übrigen abhängigen Ansprüchen angegeben.

Die Erfindung wird nun anhand mehrerer Figuren erläutert. Es zeigen:
- Fig. 1: einen Querschnitt durch eine erfindungsgemäße Stirnwand, wobei unterhalb der Mittellinie Fig. 1 eine Schnittführung außerhalb der Aus- sparung, in welcher ein Bremskraftverstärker untergebracht ist, gezeigt ist und/oder ober- halb der Mittellinie eine Schnittführung mit- tig durch die Aussparung für den Bremskraft- verstärker, sowie
- Fig. 2: eine Kraftfahrzeugkarosserie vom Innenraum des Kraftfahrzeugs aus gesehen.

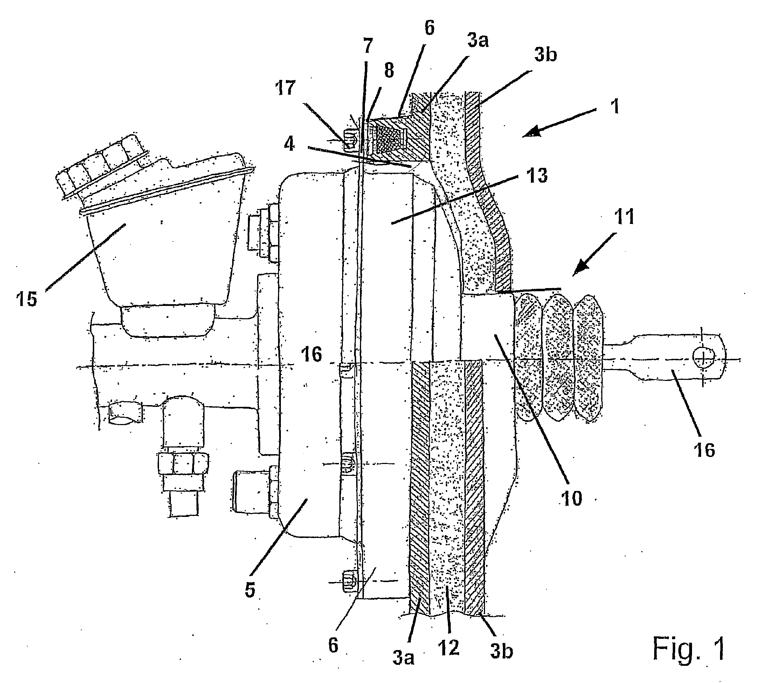

Fig. 1 zeigt eine Stirnwand 1. Diese Stirnwand 1 besteht auf einer ersten Wand 3a sowie einer davon beabstandeten Wand 3b. Zwischen erster Wand 3a und zweiter Wand 3b ist (vorliegend, aber nicht notwendigerweise) Schaum 12 vorgesehen. Die erste Wand 3a weist eine Aussparung 4 zur Aufnahme eines ausschließlich an der ersten Wand 3a befestigten Bremskraftverstärkers 5 auf. Dieser Bremskraftverstärker hat, wie die Mittellinie in Fig. 1 andeutet, zumindest im Bereich der Aussparung einen im Wesentlichen rotationssymmetrischen Querschnitt.

In Fig. 1 linksseitig ist die Motorraumseite des Kraftfahrzeugs gezeigt, es ist auch eine Zuführöffnung für Bremsflüssigkeit 15 zu sehen. Rechtsseitig der Stirnwand 1 ist ein Betätigungshebel (eine Kolbenstange) zu sehen, welcher mit einem Bremspedal des Kraftfahrzeugs in Verbindung steht. Die Aussparung 4 ist im Wesentlichen rotationssymmetrisch ausgebildet. Der Randbereich 6 der Aussparung 4 ist verstärkt, d.h. in diesem Bereich ist ein im Wesentlichen kreisringförmiger Flansch vorgesehen, in welchem die Wanddicke stärker ist als im übrigen bei der ersten Wand 3a. Der Bremskraftverstärker 5 weist zu dem Randbereich 6 der Aussparung 4 eine korrespondierende Randfläche 7 auf. Zwischen Randfläche 7 und Randbereich 6 ist ein zu dem Bremskraftverstärker 5 gehörender Elastomerring 8 (bzw. eine Elastomerscheibe) angeordnet, welcher den Luftschallübertrag vom Motorraum zum Zwischenraum zwischen erster Wand 3a und zweiter Wand 3b im Wesentlichen verhindert. Der Bremskraftverstärker 5 ist in einer Randfläche mit dem Randbereich der Aussparung verschraubt über Schrauben 17. Diese Schrauben 17 sind im verstärkten Randbereich der Aussparung eingeschraubt und können gegebenenfalls nochmals zusätzlich gedämpft sein.

Der Bremskraftverstärker 5 weist im Bereich einer Durchführöffnung 10 an der zweiten Wand 3b einen deutlich geringeren Durchmesser als im Bereich der Randfläche 7 auf. Zwischen dem Durchmesser des Bremskraftverstärkers im Bereich der Durchführöffnung und der Durchführöffnung 10 selbst ist ein Spalt 11 vorgesehen, welcher eine Größe zwischen 1 mm und 20 mm, vorzugsweise zwischen 1 mm und 5 mm, aufweist. Hiermit wird erreicht, dass selbst bei stärkeren Vibrationen eine Körperschallübertragung weitestgehend vermieden wird.

Es ist in Fig. 1 gut erkennbar, dass die Stirnwand im Bereich der Aussparung 4 bzw. der Durchführöffnung 10 Auswölbungen aufweist. Diese dienen dazu, den Bremskraftverstärker zum einen aufzunehmen und somit Bauraum möglichst gut zu nutzen. Außerdem dient diese Auswölbung im Bereich des Bremskraftverstärkers dazu, dass in diesem Bereich eine zusätzliche Versteifung auftritt und somit der Bereich um den Bremskraftverstärker herum, insbesondere bei der ersten Wand 3a, "akustisch wirksam" ist.

Zwischen erster Wand 3a sowie zweiter Wand 3b ist ein Schaum 12 angeordnet. Im Ausführungsbeispiel nach Fig. 1 hat dieser Schaum eine ungefähr gleichbleibende Schichtdicke, d.h. im Bereich der Aussparung 4 ist teilweise ein Luftzwischenraum gebildet. Der Schaum ragt im Bereich der Durchführöffnung 10 bis auf den Bremskraftverstärker heran und berührt diesen, so dass er schwingungsdämpfend wirkt.

Bezüglich der Schäumung sind jedoch noch andere Varianten denkbar. So ist es z.B. möglich, den gesamten Zwischenraum zwischen erster Wand 3a und zweiter Wand 3b auszuschäumen, so dass auch die Aussparung 4 insgesamt ausgeschäumt wird. In diesem Falle ist es auch möglich, dass der Bremskraftverstärker, welcher dann vor dem Schäumprozess bereits an die erste Wand angekoppelt würde, mit einem schaumabweisenden Material belegt ist, so dass es später zu einer leichteren Demontage des Bremskraftverstärkers kommen kann.

Erste Wand 3a sowie zweite Wand 3b sind vorliegend aus Kunststoff. Bezüglich weiterer Einzelheiten der Materialwahl wird auf die oben bezeichnete Anmeldung desselben Anmelders hingewiesen.

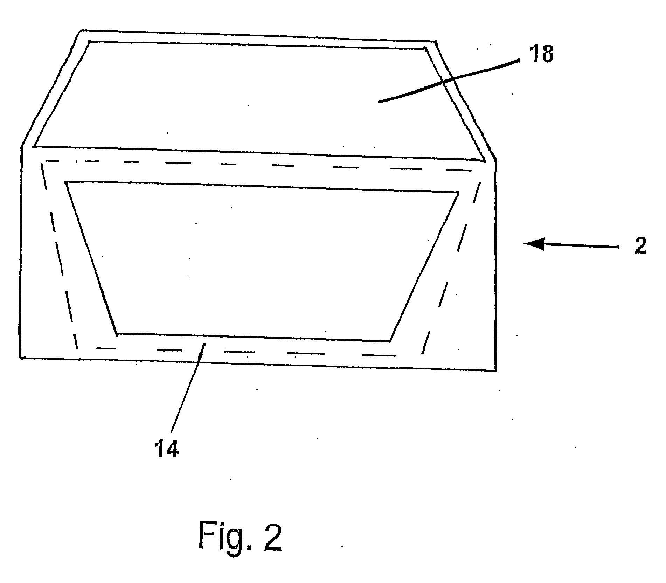

Fig. 2 zeigt eine Karosserie eines Kraftfahrzeugs 2 vom Innenraum des Kraftfahrzeugs aus gesehen. Hier ist im oberen Bereich eine Windschutzscheibenöffnung 18 sowie darunter ein Stirnwandrahmen 14 zu sehen, in welchen ein Stirnwandmodul einsetzbar ist. Bezüglich sämtlicher Einzelheiten dieses Stirnwandmoduls wird auf die entsprechende Figur in der oben bezeichneten Voranmeldung desselben Anmelders verwiesen.

Die vorliegende Erfindung betrifft somit Kraftfahrzeug mit einer stirnwand, wobei die Stirnwand eine erste sowie davon beabstandet eine zweite Wand aufweist. Die erste Wand weist eine Aussparung zur Aufnahme eines ausschließlich an der ersten Wand befestigten Bremskraftverstärkers auf. Die zweite Wand weist hierzu abgestimmt eine Durchführöffnung für den Bremskraftverstärker auf. Somit ist es also möglich, dass der Bremskraftverstärker die Stirnwand vollständig durchdringt, es also eine "fluchtende" Öffnung gibt, welche von dem Bremskraftverstärker vollständig durchdrungen wird. Hierbei ist auch im Sinne der Bauraumoptimierung nützlich, dass ein Teil des innerhalb der Stirnwand vorgesehenen Bauraumes zur Aufnahme des Bremskraftverstärkers dient. Dieser Bauraum kann vorteilhafterweise auch ausgeschäumt sein, so dass sich eine sehr gute Geräuschdämmung ergibt. Insbesondere die Befestigungsprobleme üblicher Bremskraftverstärker, welche in dem Vorliegen einer Körperschallbrücke zwischen den beiden Wänden (Deckschichten), einer Luftschallbrücke durch die üblicherweise durchlaufenden Bohrungen der Stirnwand und der Befestigung des Bremskraftverstärkers weit außerhalb dessen Schwerpunktes liegen, treten bei der vorliegenden Erfindung nicht auf. Es ergibt sich eine optimale Geräuschdämmung, außerdem wird praktisch ausgeschlossen, dass es im Fahrbetrieb zu Eigenschwingungen des Bremskraftverstärkers kommen kann, welche hohe unerwünschte Kräfte freisetzen können.

## Patentansprüche

1. Kraftfahrzeug (2) mit einer Stirnwand (1) und einem an dieser Stirnwand befestigten Bremskraftverstärker (5), wobei die Stirnwand eine erste motorraumseitige Wand (3a) sowie davon beabstandet eine zweite fahrgastraumseitige (3b) Wand aufweist, wobei die erste Wand (3a) zur Geräuschdämmung eine Aussparung (4) zur Aufnahme des ausschließlich an der ersten Wand (3a) befestigten Bremskraftverstärkers (5) aufweist und der Bremskraftverstärker (5) lediglich an der ersten Wand (3a) befestigt ist und die zweite Wand (3b) eine Durchführöffnung (10) für den Bremskraftverstärker (5) aufweist,
**dadurch gekennzeichnet,**
**dass** die Aussparung (4) einen Randbereich (6) aufweist und der Bremskraftverstärker (5) eine Randfläche (7) welche auf dem Randbereich (6) der Aussparung (4) aufliegt und die Aussparung überdeckt, aufweist,
wobei die Durchtrittsöffnung kleiner als die Aussparung ist .

2. Kraftfahrzeug nach Anspruch 1, **dadurch gekennzeichnet, dass** der Randbereich (6) der Aussparung verstärkt ist.

3. Kraftfahrzeug nach einem der Ansprüche 1 oder 2, **dadurch gekennzeichnet, dass** der Spalt (11) zwischen Durchführöffnung (10) und Bremskraftverstärker (5) im Bereich der Durchführöffnung zwischen 1 mm und 20 mm, vorzugsweise zwischen 1 mm und 5 mm beträgt.

4. Kraftfahrzeug nach einem der vorhergehenden Ansprüche, **dadurch gekennzeichnet, dass** die Stirnwand (1) im Bereich der Aussparung (4) und/oder der Durchführöffnung (10) Auswölbungen aufweist.

5. Kraftfahrzeug nach einem der vorhergehenden Ansprüche, **dadurch gekennzeichnet, dass** der Bremskraftverstärker (5) mit der ersten Wand (3a) verschraubt ist.

6. Kraftfahrzeug nach einem der vorhergehenden Ansprüche, **dadurch gekennzeichnet, dass** auf der Randfläche (7) des Bremskraftverstärkers (5) auf der zum Randbereich (6) hin orientierten Seite ein Elastomerring (8) angeordnet ist.

7. Kraftfahrzeug nach einem der vorhergehenden Ansprüche, **dadurch gekennzeichnet, dass** die Stirnwand (1) im Bereich der Aussparung (4) Verstärkungsstege aufweist.

8. Kraftfahrzeug nach einem der vorhergehenden Ansprüche, **dadurch gekennzeichnet, dass** zwischen erster (3a) und zweiter (3b) Wand Schaum (12) angeordnet ist.

9. Kraftfahrzeug nach einem der vorhergehenden Ansprüche, **dadurch gekennzeichnet, dass** der Bremskraftverstärker auf seiner Außenfläche (13) mit einem schaumabweisenden Material belegt ist.

10. Kraftfahrzeug nach einem der vorhergehenden Ansprüche, **dadurch gekennzeichnet, dass** die erste (3a) und/oder zweite (3b) Wand aus Kunststoff oder Metall sind.

## Claims

1. A motor vehicle (2) having a front wall (1) and a brake booster (5) secured to the latter, wherein the front wall has a first wall (3a), located at the side closest to the engine compartment, and at a distance therefrom has a second wall (3b) located at the side closest to the passenger compartment, wherein the first wall (3a) has, for the purpose of sound insulation, a cutout (4) for receiving the brake booster (5) solely secured to the first wall (3a) and the brake booster (5) is only secured to the first wall (3a) and the second wall (3b) has a through-passage opening (10) for the brake booster (5), **characterised in that** the cutout (4) has an edge region (6) and the brake booster (5) has an edge surface (7) which rests on the edge region (6) of the cutout (4) and covers the cutout, the through-passage opening being smaller than the cutout.

2. A motor vehicle according to Claim 1, **characterised in that** the edge region (6) of the cutout is reinforced.

3. A motor vehicle according to one of claims 1 and 2, **characterised in that** the gap (11) between the through-passage opening (10) and the brake booster (5) in the region of the through-passage opening is between 1 mm and 20 mm, preferably between 1 mm and 5 mm.

4. A motor vehicle according to any one of the preceding claims, **characterised in that** the front wall (1) has bulges in the region of the cutout (4) and/or the through-passage opening (10).

5. A motor vehicle according to any one of the preceding claims, **characterised in that** the brake booster (5) is screwed to the first wall (3a).

6. A motor vehicle according to any one of the preceding claims, **characterised in that** an elastomer ring (8) is arranged on the edge surface (7) of the brake booster (5), at the side directed towards the edge region (6).

7. A motor vehicle according to any one of the preceding claims, **characterised in that** the front wall (1) has reinforcing elongated members in the region of the cutout (4).

8. A motor vehicle according to any one of the preceding claims, **characterised in that** foam (12) is arranged between the first wall (3a) and the second wall (3b).

9. A motor vehicle according to any one of the preceding claims, **characterised in that** the brake booster is covered with a foam-repellent material on its outer surface (13).

10. A motor vehicle according to any one of the preceding claims, **characterised in that** the first wall (3 a) and/or second wall (3b) is/are made of plastics material or metal.

## Revendications

1. Véhicule automobile (2) avec une paroi frontale (1) et un servofrein (5) fixé sur cette paroi frontale, la paroi frontale comportant une première paroi (3a) côté enceinte du moteur ainsi que, espacée de celle-ci, une seconde paroi (3b) côté habitacle, la première paroi (3a) présentant, pour amortir les bruits, une découpe (4) pour recevoir le servofrein (5) fixé exclusivement sur la première paroi (3a), et le servofrein (5) étant fixé uniquement à la première paroi (3a), et la seconde paroi (3b) présentant une ouverture de passage (10) pour le servofrein (5),
**caractérisé en ce que** la découpe (4) présente une zone de bordure (6) et le servofrein (5) présente une surface de bordure (7) qui repose sur la zone de bordure (6) de la découpe (4) et recouvre la découpe, l'ouverture de passage étant plus petite que la découpe.

2. Véhicule automobile selon la revendication 1, **caractérisé en ce que** la zone de bordure (6) de la découpe est renforcée.

3. Véhicule automobile selon l'une quelconque des revendications 1 ou 2, **caractérisé en ce que** la fente (11) entre l'ouverture de passage (10) et le servofrein (5) est comprise entre 1 mm et 20 mm, de préférence entre 1 mm et 5 mm, dans la zone de l'ouverture de passage.

4. Véhicule automobile selon l'une quelconque des revendications précédentes, **caractérisé en ce que** la paroi frontale (1) présente des bombements dans la zone de la découpe (4) et/ou de l'ouverture de passage (10).

5. Véhicule automobile selon l'une quelconque des revendications précédentes, **caractérisé en ce que** le servofrein (5) est vissé avec la première paroi (3a).

6. Véhicule automobile selon l'une quelconque des revendications précédentes, **caractérisé en ce qu'**une bague élastomère (8) est disposée sur la surface de bordure (7) du servofrein (5), sur le côté orienté vers la zone de bordure (6).

7. Véhicule automobile selon l'une quelconque des revendications précédentes, **caractérisé en ce que** la paroi frontale (1) présente des nervures de renfort dans la zone de la découpe (4).

8. Véhicule automobile selon l'une quelconque des revendications précédentes, **caractérisé en ce que** de la mousse (12) est disposée entre la première paroi (3a) et la seconde paroi (3b).

9. Véhicule automobile selon l'une quelconque des revendications précédentes, **caractérisé en ce que** le servofrein est recouvert sur sa surface extérieure (13) d'un matériau qui rejette la mousse.

10. Véhicule automobile selon l'une quelconque des revendications précédentes, **caractérisé en ce que** la première paroi (3a) et/ou la seconde paroi (3b) sont en matière plastique ou en métal.
